# EUROPEAN PATENT SPECIFICATION

(11) **EP 3 358 998 B1**
(45) Date of publication and mention of the grant of the patent: **05.05.2021**
(21) Application number: 16779199.5
(22) Date of filing: 08.08.2016
(51) Int. Cl.: A47J 31/36

(54) **A COFFEE MACHINE USED WITH CAPSULE**
KAFFEEMASCHINE ZUR VERWENDUNG MIT KAPSELN
MACHINE À CAFÉ UTILISANT UNE CAPSULE

(30) Priority: 09.10.2015 TR 201512567
(43) Date of publication of application: 15.08.2018
(73) Proprietor: Arçelik Anonim Sirketi, 34445 Istanbul (TR)
(72) Inventor: GUNDUZ, Nihat, 34950 Tuzla/Istanbul (TR); ALPTEKIN, Ahmet, 34950 Tuzla/Istanbul (TR); COBAN, Omer Burak, 34950 Tuzla/Istanbul (TR); AYAROGLU, Emre, 34950 Tuzla/Istanbul (TR); CENGIZ, Osman, 34950 Tuzla/Istanbul (TR)
(86) International application number: PCT/TR2016/050280
(87) International publication number: WO 2017/061966

(56) References cited:
- WO-A1-2013/137728

## Description

The present invention is related to a coffee machine suitable for use with a single-use capsule containing coffee.

Use of single-use capsule containing coffee in coffee machines is known. In this kind of machines, the capsule is placed into a housing disposed on the upper part of the machine body and the capsule is burst and the coffee contained therein is poured into a brewing chamber disposed at the lower part of the housing. The coffee in the brewing chamber is mixed with water and heated by a heater preferably disposed under the brewing chamber. The brewed coffee can be automatically transferred to a cup or can be transferred by the user to a cup. After the brewing process, the brewing chamber is removed to clean the waste coffee in the brewing chamber. When the user forgets to replace the brewing chamber and attempts to brew coffee, the coffee from the capsule pours on the heater. When the brewing process is done in such case, the dry coffee on the heater is burnt; forming a layer on the heater that is hard to clean and at the same time smells bad. Moreover, the burnt coffee may lead to safety weakness that may cause even fire.

In the state of the art International Patent Application No. WO2011007266, a coffee machine wherein capsules are used is disclosed.

In the state of the art Turkish Patent Application No. TR200100549, a coffee machine wherein capsules are used is disclosed.

The aim of the present invention is the realization of a coffee machine that can be operated safely, with the problems mentioned in the preamble have been solved.

The coffee machine realized in order to attain the aim of the present invention, explicated in the claims, comprises a waste coffee receptacle that prevents the coffee poured upon opening of the capsule when the capsule is placed into the coffee machine when the brewing chamber is not in place from falling on the heater and that collects the coffee poured from the opened capsule by the inlet port thereof aligning with the capsule housing wherein the capsule is placed when the brewing chamber is not in place. When the brewing chamber is removed from its place, the inlet port of the waste coffee receptacle aligns with the capsule housing and the waste coffee receptacle serves as a barrier between the capsule housing and the heater. The waste coffee receptacle prevents the coffee pouring from the capsule housing from falling on the heater. Thus, the waste coffee receptacle collects the coffee falling from the capsule housing. The coffee is collected in the waste coffee receptacle and then can be cleaned automatically or by the user. By means of the collection of the coffee, the coffee is prevented from being wasted. In a version of this embodiment, when the brewing chamber is replaced, the inlet port goes out of alignment with the capsule housing and the coffee pouring from the capsule housing is transferred into the brewing chamber.

In an embodiment of the present invention, the waste coffee receptacle is disposed behind the brewing chamber. When the user takes out the brewing chamber, the waste coffee receptacle moves toward the position where the brewing chamber is placed, in other words, moves forward and changes to an inclined position.

In another embodiment of the present invention, the waste coffee receptacle changes from the inclined position to a perpendicular position with the contact of the brewing chamber. Thereby, when the user replaces the brewing chamber into the housing, the waste coffee receptacle changes to the perpendicular position without requiring an extra action from the user.

In another embodiment of the present invention, the waste coffee receptacle changes to the inclined position by its own weight after the brewing chamber is taken out. When the brewing chamber is replaced, with the contact of the brewing chamber to the waste coffee receptacle, the waste coffee receptacle changes to the perpendicular position.

In another embodiment of the present invention, the coffee machine contains a support whereon the waste coffee receptacle is placed and that enables the waste coffee receptacle to rotate around a pivot pin disposed thereon, and the waste coffee receptacle rotates around the pivot pin, thus changing from the perpendicular position to the inclined position and from the inclined position to the perpendicular position. In other words, the waste coffee receptacle is opened and closed by rotating.

In another embodiment of the present invention, the waste coffee receptacle comprises a movement mechanism that enables the waste coffee receptacle to change from the perpendicular position to the inclined position and that constantly tries to keep the waste coffee receptacle in the inclined position. In this embodiment, when the brewing chamber is taken out, the movement mechanism enables the waste coffee chamber to change to the inclined position. In a version of this embodiment, the movement mechanism has an opening arranged at the base of the support, a pushing pin that enters the opening so as to enable the waste coffee receptacle to be pushed, and a spring that is wrapped around the pushing pin and that enables, by way of compressing and decompressing, the pushing pin to move.

In another embodiment of the present invention, the inlet port of the waste coffee receptacle is designed in an angular manner so as to become parallel with the horizontal plane when the waste coffee receptacle changes to the inclined position. In this embodiment, the angle of gradient of the inlet port is equal to the angle of the waste coffee receptacle to the perpendicular plane when the latter is in the inclined position.

In another embodiment of the present invention, the coffee machine comprises a rail that is positioned opposite to the waste coffee receptacle in the body, that enables easy removal of the waste coffee receptacle, and a slide aligning with the rail. When the waste coffee receptacle is taken out and replaced, the rail enters the slide and thereby provides guiding of the movement.

In another embodiment of the present invention, the waste coffee receptacle comprises a handle so that the user can hold. The user can grip the handle of the waste coffee receptacle and take the same out of the coffee machine.

In the coffee machine of the present invention, any hazardous situations that may occur due to absentmindedness or fault of the user are prevented by means of the waste coffee receptacle changing to the inclined position when the brewing chamber is taken out. Moreover, the coffee pouring when the brewing chamber is not in place is prevented from being wasted by collecting the coffee in the waste coffee receptacle and the user can use the poured out coffee again by transferring the same to the brewing chamber.

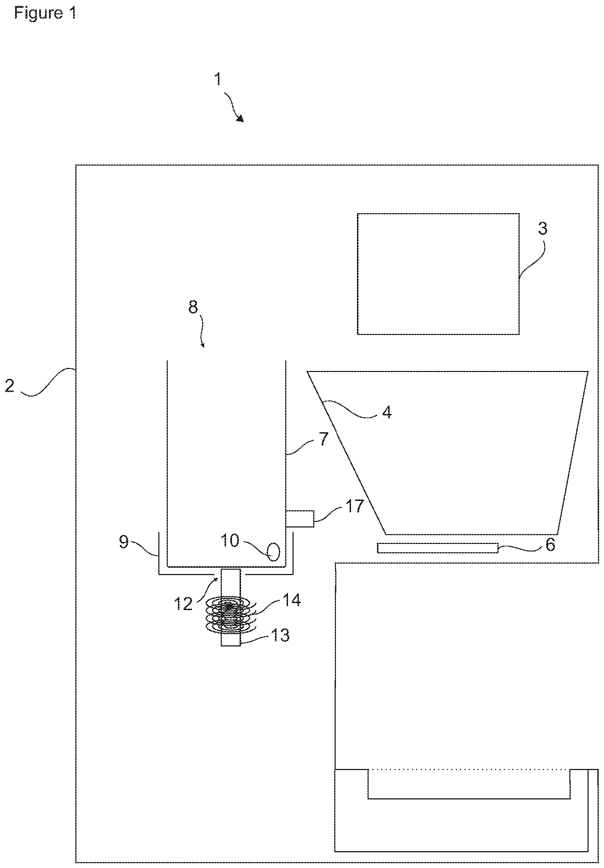

The coffee machine realized in order to attain the aim of the present invention is illustrated in the attached figures where
Figure 1 - is the sideways schematic view of a coffee machine.

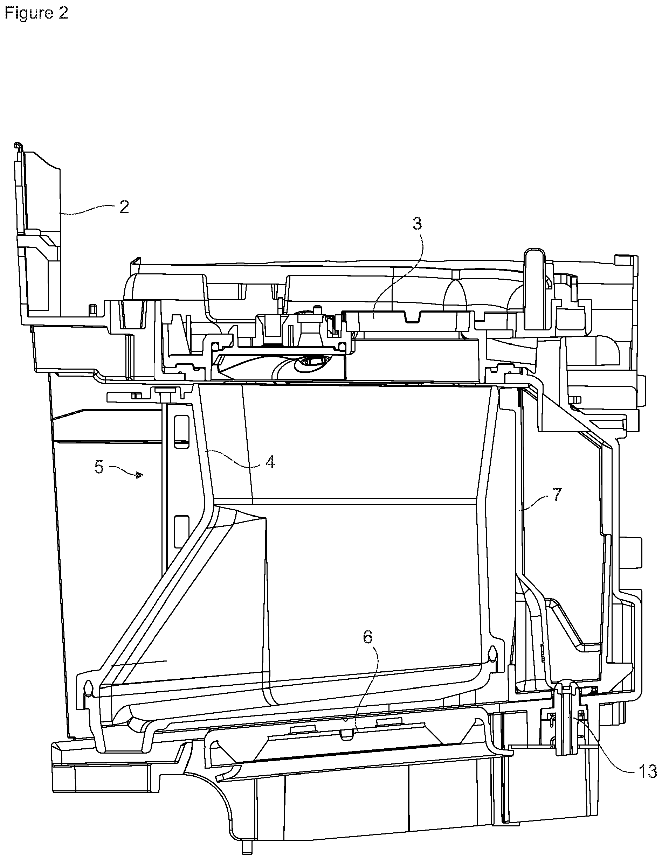

Figure 2 is the sideways schematic view of the brewing chamber and the waste coffee receptacle in the perpendicular position in an embodiment of the present invention.

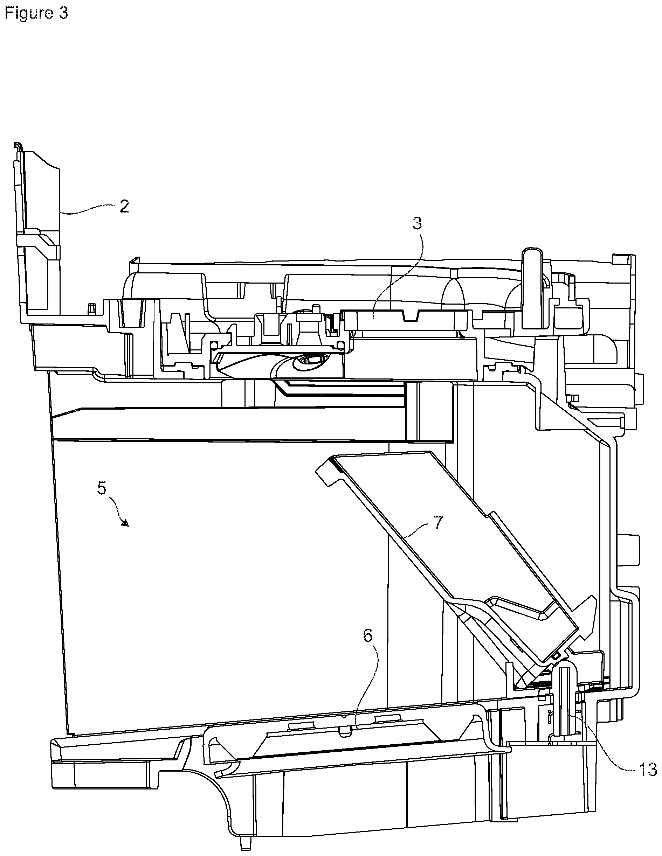

Figure 3 - is the sideways schematic view of the waste coffee receptacle in the inclined position in an embodiment of the present invention.

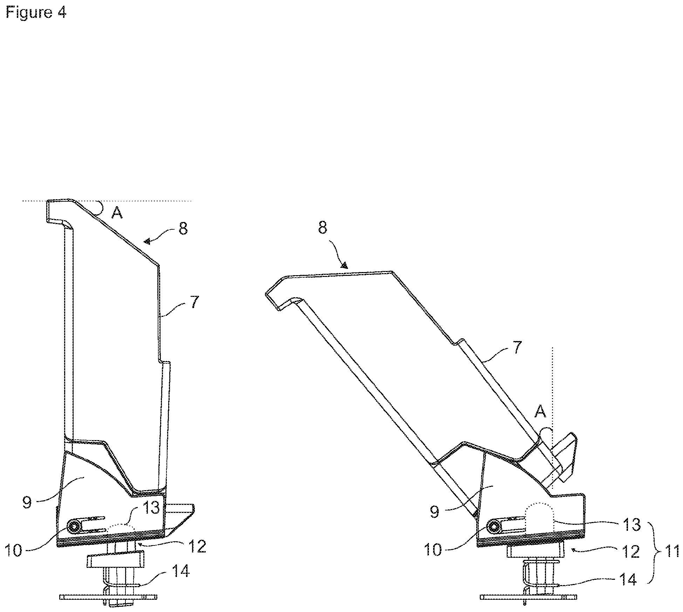

Figure 4 - is the schematic view of the perpendicular and inclined positions of the waste coffee receptacle and of the movement mechanism related to an embodiment of the present invention.

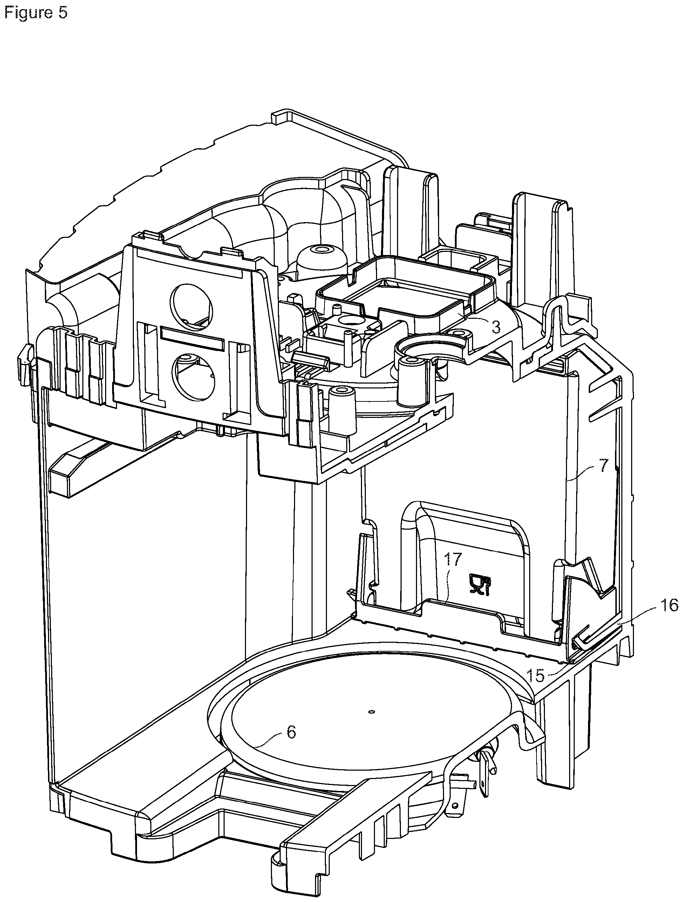

Figure 5 - is the partial perspective view of the heater and the waste coffee receptacle in an embodiment of the present invention.

The elements and steps in the figures are numbered as follows:
1. Coffee machine
2. Body
3. Capsule housing
4. Brewing chamber
5. Housing
6. Heater
7. Waste coffee receptacle
8. Inlet port
9. Support
10. Pivot pin
11. Movement mechanism
12. Opening
13. Pushing pin
14. Spring
15. Rail
16. Slide
17. Handle

### A. Bending angle

The coffee machine (1) comprises a body (2); a capsule housing (3) that is disposed on the upper part of the body (2) and wherein a preferably single-use capsule is placed; a brewing chamber (4) wherein coffee and water are added and brewed, that is disposed so as to remain under the capsule housing (3) in the body (2) and that can be taken out from the body (2); a housing (5) that is disposed in the body (2) and wherein the brewing chamber (4) is placed, and a heater (6) that provides the heating of the brewing chamber (4).

In the coffee machine (1), when the user places the capsule into the capsule housing (3) and the capsule is opened, the coffee is transferred to the brewing chamber (4) that is disposed in the housing (5). When the user gives the start brewing command, water is transmitted from the water tank (not shown in the figures) by means of a pump (not shown in the figures) through the water line (not shown in the figures) into the brewing chamber (4) and the heater (6) heats up the brewing chamber (4), thus providing brewing of the coffee. The heater (6) is preferably disposed under the brewing chamber (4) and the heater (6) comes into contact with the brewing chamber (4) only during the heating process and the heater (6) preferably has a configuration that can move up and down.

The brewing chamber (4) can be taken out of the housing (5) for reasons such as cleaning, etc. The brewing chamber (4) is taken out preferably by opening a lid (not shown in the figures) disposed on the front wall of the body (2) and pulling the brewing chamber (4) forward from the housing (5).

The coffee machine (1) of the present invention comprises a waste coffee receptacle (7) that is disposed in the body (2), that has an inlet port (8) on the upper part thereof, that moves when the brewing chamber (4) is taken out of the housing (5) so that the inlet port (8) thereof aligns with the capsule housing (3), and wherein the coffee poured out from the capsule is collected when the capsule is burst/opened.

In the coffee machine (1) of the present invention, by means of the waste coffee receptacle (7), the coffee is prevented from falling on the heater (6) upon the opening of the preferably single-use capsule placed into the capsule housing (3) when the user attempts to brew coffee when the brewing chamber (4) is not in place, in other words, the brewing chamber (4) is taken out of the housing (5) for the purpose of cleaning, etc. When the brewing chamber (4) is taken out, the waste coffee receptacle (7) moves and the inlet port (8) remains almost under the capsule housing (3), thus forming an obstacle above the heater (6). The coffee pouring out from the capsule housing (3) enters through the inlet port (8) and is collected in the waste coffee receptacle (7).

In an embodiment of the present invention, when the brewing chamber (4) is placed into the housing (5), the waste coffee receptacle (7) is pushed by the brewing chamber (4) and the inlet port (8) goes out of alignment with the capsule housing (3). When the brewing chamber (4) is placed into the housing (5), the waste coffee receptacle (7) moves with the contact of the brewing chamber (4) and the inlet port (8) goes out of alignment with the capsule housing (3). The coffee pouring from the capsule housing (3) flows into the brewing chamber (4) upon the moving of the inlet port (8) out of alignment with the capsule housing (3).

In another embodiment of the present invention, the waste coffee receptacle (7) is placed into the housing (5) so as to remain behind the brewing chamber (4). In this embodiment, if, for example, the brewing chamber (4) is taken out of the housing (5) through an opening (not shown in the figures) arranged on the front wall of the body (2), the waste coffee receptacle (7) is disposed behind the brewing chamber (4) so as to be seen when the brewing chamber (4) is taken out.

In another embodiment of the present invention, when the brewing chamber (4) is placed into the housing (5), the waste coffee receptacle (7) is pushed by the brewing chamber (4) and changes to the perpendicular position and when the brewing chamber (4) is taken out of the housing (5), the waste coffee receptacle (7) changes to the inclined position. When the brewing chamber (4) is taken out, the waste coffee receptacle (7) changes to the inclined position and the inlet port (8) remains almost under the capsule housing (3), thus forming an obstacle above the heater (6). When the brewing chamber (4) is replaced, the waste coffee receptacle (7) changes to the perpendicular position and the coffee pouring from the capsule housing (3) flows into the brewing chamber (4).

In another embodiment of the present invention, when the brewing chamber (4) is taken out of the housing (5), the waste coffee receptacle (7) changes to the inclined position by the effect of its own weight. No mechanism is required for shifting of the waste coffee receptacle (7) between the inclined position and the perpendicular position and upon taking out the brewing chamber (4), the waste coffee receptacle (7) changes to the inclined position by the effect of its own weight. Thereby, when the user places a capsule into the coffee machine (1) and bursts the capsule when the brewing chamber (4) is not in place, pouring of the coffee into the waste coffee receptacle (7) is ensured.

In another embodiment of the present invention, the coffee machine (1) comprises a support (9) that supports the waste coffee receptacle (7) and that has a pivot pin (10) bearing the waste coffee receptacle (7) so as to rotate on the horizontal axis. The waste coffee receptacle (7) rotates around the pivot pin (7) and changes to the inclined position and when in the inclined position, the coffee pouring from the capsule housing (3) pours into the waste coffee receptacle (7). When the brewing chamber (4) is replaced, with the contact of the brewing chamber (4), the waste coffee receptacle (7) rotates around the pivot pin (10) and changes from the inclined position to the perpendicular position.

In another embodiment of the present invention, the coffee machine (1) comprises a movement mechanism (11) that enables the waste coffee receptacle (7) to be changed to the inclined position when the brewing chamber (4) is taken out of the housing (5). The movement mechanism (11) forces the waste coffee receptacle (7) to stand in the inclined position constantly. Therefore, when the brewing chamber (4) is taken out, in other words, when taken out of the housing (5), the waste coffee receptacle (7) changes to the inclined position by means of the movement mechanism (11). The movement mechanism (11) can either force the waste coffee receptacle (7) to stand in the inclined position by pushing the same from the lower part or perform the same function by pulling the same from the upper part.

In another embodiment of the present invention, the movement mechanism (11) comprises an opening (12) arranged under the support (9), a pushing pin (13) that passes through the opening (12) to bear against the base of the waste coffee receptacle (7), and a spring (14) fitted over the pushing pin (13). In this embodiment, when placed into the housing (5), the brewing chamber (4) pushes the waste coffee receptacle (7), and as the waste coffee receptacle (7) changes to the perpendicular position, the base thereof moves the pushing pin (13) downward, thus compressing the spring (14). When the brewing chamber (4) is taken out of the housing (5), the spring (14) stretches and pushes the pushing pin (13) and hence the waste coffee receptacle (7) against which the pushing pin (13) bears, upward. The waste coffee receptacle (7) connected with the pivot pin (10) and the support (9) in the front of the base rotates around the axis of the pivot pin (10) and makes a bending movement and the inlet port (8) aligns with the lower part of the capsule housing (3).

In another embodiment of the present invention, the waste coffee receptacle (7) has the inlet port (8) that opens to be inclined with respect to the horizontal plane in opposite direction of the inclination (A) so as to correspond to the inclination angle (A) of the waste coffee receptacle (7) in the inclined position. Thereby, when the waste coffee receptacle (7) is in the inclined position, the cross-sectional area of the inlet port (8) on the horizontal plane is increased and the coffee poured out from the capsule housing (3) is collected without spilling outside.

In another embodiment of the present invention, the coffee machine (1) comprises rails (15) that are disposed on the edges of the waste coffee receptacle (7) and slides (16) that are disposed in the body (2) and that engage with the rails (15) to enable the placement of the waste coffee receptacle (7) into its place. By means of this embodiment, taking out and replacement movement of the waste coffee receptacle (7) is guided and the user can easily take out and replace the waste coffee receptacle (7) of and into the body (2). In different versions of this embodiment, the slide (16) can be disposed on the waste coffee receptacle (7) and the rail (15) on the body (2).

In another embodiment of the present invention, the waste coffee receptacle (7) comprises a handle (17) that facilitates to take out the same and enables the user to handle the waste coffee receptacle (7). The handle (17) is disposed on the front surface of the waste coffee receptacle (7) and after taking out the brewing chamber (4), the user holds the handle (17) and can take out the waste coffee receptacle (7).

In another embodiment of the present invention, the coffee machine (1) is suitable for brewing Turkish coffee. The coffee is brewed in the brewing chamber (4) and decanted into a cup.

By means of the waste coffee receptacle (7) of the present invention that is disposed on the coffee machine (1) of the present invention, the coffee is prevented from falling on the heater (6) when the coffee is tried to be brewed when the brewing chamber (4) is not in its place and a safe use is provided. By means of the present invention, hazards such as fire that may be caused by coffee falling on the heater (6) are prevented.

## Claims

1. A coffee machine (1) **comprising** a body (2); a capsule housing (3) that is disposed on the upper part of the body (2) and wherein a preferably single-use capsule is placed; a brewing chamber (4) wherein coffee and water are added and brewed, that is disposed so as to remain under the capsule housing (3) in the body (2) and that can be taken out from the body (2); a housing (5) that is disposed in the body (2) and wherein the brewing chamber (4) is placed, and a heater (6) that provides the heating of the brewing chamber (4), **characterized by** a waste coffee receptacle (7) that is disposed in the body (2), that has an inlet port (8) on the upper part thereof, that moves when the brewing chamber (4) is taken out of the housing (5) so that the inlet port (8) thereof aligns with the capsule housing (3), and wherein the coffee poured out from the capsule is collected when the capsule is burst/opened.

2. A coffee machine (1) as in Claim 1, **characterized by** the waste coffee receptacle (7) which is pushed by the brewing chamber (4) when the brewing chamber (4) is placed into the housing (5) and of which inlet port (8) goes out of alignment with the capsule housing (3).

3. A coffee machine (1) as in Claim 1 or 2, **characterized by** the waste coffee receptacle (7) placed into the housing (5) so as to remain behind the brewing chamber (4).

4. A coffee machine (1) as in any of the above claims, **characterized by** the waste coffee receptacle (7) that is pushed by the brewing chamber (4) when the brewing chamber (4) is placed into the housing (5) and changes to the perpendicular position and changes to the inclined position when the brewing chamber (4) is taken out of the housing (5).

5. A coffee machine (1) as in Claim 4, **characterized by** the waste coffee receptacle that changes to the inclined position by the effect of its own weight when the brewing chamber (4) is taken out of the housing (5).

6. A coffee machine (1) as in any one of Claims 1 to 4, **characterized by** a support (9) that supports the waste coffee receptacle (7) and that has a pivot pin (10) bearing the waste coffee receptacle (7) so as to rotate around the horizontal axis.

7. A coffee machine (1) as in Claim 6, **characterized by** a movement mechanism (11) that enables the waste coffee receptacle (7) to be changed to the inclined position when the brewing chamber (4) is taken out of the housing (5).

8. A coffee machine (1) as in Claim 7, **characterized by** the movement mechanism that has an opening (12) arranged under the support (9), a pushing pin (13) passing through the opening (12) to bear against the base of the waste coffee receptacle (7), and a spring (14) fitted over the pushing pin (13).

9. A coffee machine (1) as in any of the above claims, **characterized by** the waste coffee receptacle (7) that has the inlet port (8) which opens as inclined with respect to the horizontal plane in opposite direction of bending so as to correspond to the bending angle (A) of the waste coffee receptacle (7) in the inclined position.

10. A coffee machine (1) as in Claim 1 or 7, **characterized by** rails (15) that are disposed on the edges of the waste coffee receptacle (7) and slides (16) that are disposed in the body (2) and that engage with the rails (15) to enable the replacement of the waste coffee receptacle (7).

11. A coffee machine (1) as in Claim 4 or 5, **characterized by** the waste coffee receptacle (7) having a handle (17) which enables the same to be easily taken out.

## Patentansprüche

1. Eine Kaffeemaschine (1) umfasst einen Körper (2); ein Kapselgehäuse (3), das am oberen Teil des Körpers (2) angeordnet ist und in dem vorzugsweise eine Einwegkapsel eingelegt wird; eine Brühkammer (4), in der Kaffee und Wasser hinzugefügt und gebrüht werden, die so angeordnet ist, dass sie unter dem Kapselgehäuse (3) im Körper (2) verbleibt und aus dem Körper (2) herausgenommen werden kann; ein Gehäuse (5), das in dem Körper (2) angeordnet ist und in dessen die Brühkammer (4) angeordnet ist und eine Heizung (6), die die Erwärmung der Brühkammer (4) ermöglicht; **gekennzeichnet ist sie dadurch,** dass ein Kaffeeabfallbehälter (7) in dem Körper (2) angeordnet ist und an seinem oberen Teil eine Einlassöffnung (8) aufweist, die sich bewegt, wenn die Brühkammer (4) aus dem Gehäuse (5) herausgenommen wird, so dass die Einlassöffnung (8) mit dem Kapselgehäuse (3) ausgerichtet ist, wobei der aus der Kapsel gegossene Kaffee gesammelt wird, wenn die Kapsel platzt / geöffnet wird.

2. Eine Kaffeemaschine (1), wie in Anspruch 1 aufgeführt, **ist dadurch gekennzeichnet, dass** der Kaffeeabfallbehälter (7) von der Brühkammer (4) gedrückt wird, wenn die Brühkammer (4) in das Gehäuse (5) eingesetzt wird und dessen Einlassöffnung (8) nicht mit dem Kapselgehäuse (3) ausgerichtet ist.

3. Eine Kaffeemaschine (1), wie in Anspruch 1 oder 2 aufgeführt, **ist dadurch gekennzeichnet, dass** der Kaffeeabfallbehälter (7) in das Gehäuse (5) eingesetzt ist, um hinter der Brühkammer (4) zu bleiben.

4. Eine Kaffeemaschine (1), wie in einem der vorherigen Ansprüchen aufgeführt, **ist dadurch gekennzeichnet, dass** der Kaffeeabfallbehälter (7) von der Brühkammer (4) gedrückt wird, wenn die Brühkammer (4) in das Gehäuse (5) eingesetzt wird, und sich in die senkrechte Position sowie die geneigte Position ändert, wenn die Brühkammer (4) aus dem Gehäuse (5) herausgenommen wird.

5. Eine Kaffeemaschine (1), wie in Anspruch 4 aufgeführt, **ist dadurch gekennzeichnet, dass** der Kaffeeabfallbehälter (7) sich durch die Wirkung seines Eigengewichts in die geneigte Position ändert, wenn die Brühkammer (4) aus dem Gehäuse (5) herausgenommen wird.

6. Eine Kaffeemaschine (1), wie in einem der Ansprüche 1 bis 4, **ist dadurch gekennzeichnet, dass** eine Halterung (9) den Kaffeeabfallbehälter (7) trägt und einen Drehstift (10) umfasst, der den Kaffeeabfallbehälter (7) so trägt, dass er sich um die horizontale Achse dreht.

7. Eine Kaffeemaschine (1), wie in Anspruch 6 aufgeführt, **ist dadurch gekennzeichnet, dass** ein Bewegungsmechanismus (11) es ermöglicht, den Kaffeeabfallbehälter (7) in die geneigte Position zu bringen, wenn die Brühkammer (5) aus dem Gehäuse (5) herausgenommen wird.

8. Eine Kaffeemaschine (1), wie in Anspruch 7 aufgeführt, **ist dadurch gekennzeichnet, dass** der Bewegungsmechanismus eine Öffnung (12) aufweist, die unter dem Halter (9) angeordnet ist, wobei ein Druckstift (13) durch die Öffnung (12) verläuft, um gegen die Basis von dem Kaffeeabfallbehälter (7) zu drücken und eine Feder (14), die über dem Druckstift (13) angebracht ist.

9. Eine Kaffeemaschine (1), wie in einem der vorherigen Ansprüchen aufgeführt, **ist dadurch gekennzeichnet, dass** der Kaffeeabfallbehälter (7) eine Einlassöffnung (8) aufweist, die sich in Bezug auf die horizontale Ebene in entgegengesetzter Biegerichtung geneigt öffnet, um entsprechend auf den Biegewinkel (A) des Kaffeeabfallbehälters (7) in geneigter Position zu sein.

10. Eine Kaffeemaschine (1), wie in den Ansprüchen 1 oder 7 aufgeführt, **ist dadurch gekennzeichnet, dass** Schienen (15) an den Rändern des Kaffeeabfallbehälters (7) angeordnet sind, sowie Schieber (16) in dem Körper (2) angeordnet sind und mit den Schienen (15) in Eingriff stehen, um den Austausch des Kaffeeabfallbehälters (7) zu ermöglichen.

11. Eine Kaffeemaschine (1), wie in den Ansprüchen 4 oder 5 aufgeführt, **ist dadurch gekennzeichnet, dass** der Kaffeeabfallbehälter (7) durch einen Griff (17) leicht Herausnehmbar ist.

## Revendications

1. Une machine à café (1) **comprenant** un corps (2) ; un logement de dosette de café (3) qui est disposé sur la partie supérieure du corps (2) et dans lequel une dosette de café, de préférence à usage unique, est placée ; une chambre d'infusion (4) dans laquelle le café et l'eau sont ajoutés et infusés, qui est disposée de manière à rester sous le logement de la dosette de café (3) dans le corps (2) et qui peut être retirée du corps (2) ; un logement (5) qui est disposé dans le corps (2) et dans lequel la chambre d'infusion (4) est placée, et un dispositif de chauffage (6) qui assure le chauffage de la chambre d'infusion (4), **est caractérisé en ce qu'**un réceptacle à café perdu (7) est disposé dans le corps (2), qui a un orifice d'entrée (8) sur sa partie supérieure, qui se déplace lorsque la chambre d'infusion (4) est sortie du logement (5) de sorte que son orifice d'entrée (8) s'aligne avec le logement de la dosette de café (3), et dans lequel le café versé de la dosette de café est collecté lorsque la capsule est éclatée/ouverte.

2. Une machine à café (1) comme dans la déclaration 1, **est caractérisée en ce que** le réceptacle de café perdu (7) est poussé par la chambre d'infusion (4) lorsque la chambre d'infusion (4) est placée dans le logement (5) et dont l'orifice d'entrée (8) sort de l'alignement avec le logement de la dosette de café (3).

3. Une machine à café (1) comme dans la déclaration 1 ou 2, **est caractérisée en ce que** le réceptacle à déchets de café (7) est placé dans le logement (5) de manière à rester derrière la chambre d'infusion (4).

4. Une machine à café (1) comme dans l'une quelconque des déclarations précédentes, **est caractérisée en ce que** le réceptacle à déchets de café (7) est poussé par la chambre d'infusion (4) lorsque la chambre d'infusion (4) est placée dans le logement (5) et passe à la position perpendiculaire et passe à la position inclinée lorsque la chambre d'infusion (4) est retirée du logement (5).

5. Une machine à café (1) comme dans la déclaration 4, **est caractérisée en ce que** le réceptacle de déchets de café passe à la position inclinée par l'effet de son propre poids lorsque la chambre d'infusion (4) est retirée du logement (5).

6. Une machine à café (1) comme dans l'une quelconque des déclarations 1 à 4, **est caractérisée en ce qu'**elle comporte un support (9) qui supporte le réceptacle de déchets de café (7) et qui a un axe de pivotement (10) portant le réceptacle de déchets de café (7) de façon à ce qu'il tourne autour de l'axe horizontal.

7. Une machine à café (1) comme dans la déclaration 6, **est caractérisée en ce qu'**un mécanisme de mouvement (11) permet au réceptacle de déchets de café (7) d'être changé en position inclinée lorsque la chambre d'infusion (4) est retirée du logement (5).

8. Une machine à café (1) comme dans la déclaration 7, **est caractérisée en ce que** le mécanisme de mouvement a une ouverture (12) disposée sous le support (9), un axe de poussée (13) passant à travers l'ouverture (12) pour s'appuyer contre la base du réceptacle de déchets de café (7), et un ressort (14) monté sur l'axe de poussée (13).

9. Une machine à café (1) comme dans l'une quelconque des déclarations précédentes, **est caractérisée en ce que** le réceptacle de déchets de café (7) a un orifice d'entrée (8) qui s'ouvre en étant incliné par rapport au plan horizontal dans la direction opposée de la flexion de façon à correspondre à l'angle de flexion (A) du réceptacle de déchets de café (7) dans la position inclinée.

10. Une machine à café (1) comme dans la déclaration 1 ou 7, **est caractérisée en ce que** des rails (15) sont disposés sur les bords du réceptacle à déchets de café (7) et des glissières (16) sont disposées dans le corps (2) et s'engagent avec les rails (15) pour permettre le remplacement du réceptacle à déchets de café (7).

11. Une machine à café (1) comme dans la déclaration 4 ou 5, **est caractérisée en ce que** le réceptacle de déchets de café (7) a une poignée (17) qui permet à celui-ci d'être facilement enlevé.
